# EUROPÄISCHE PATENTANMELDUNG

(11) **EP 2 606 846 A1**
(43) Veröffentlichungstag der Anmeldung: **26.06.2013**
(21) Anmeldenummer: 11194541.6
(22) Anmeldetag: 20.12.2011
(51) Int. Cl.: A61C 1/05

(54) **Medizinisches, insbesondere dentales Turbinenhandstück**

(71) Anmelder: Kaltenbach & Voigt GmbH, 88400 Biberach (DE)
(72) Erfinder: Kuhn, Bernhard, 88400 Biberach (DE); Gugel, Bernd, 89079 Ulm (DE); Braun, Thomas, 88400 Biberach (DE)
(74) Vertreter: Thun, Clemens

(57) **Zusammenfassung**

Die Erfindung betrifft ein medizinisches, insbesondere dentales Turbinenhandstück, das eine Kammer (2) aufweist, sowie ein Turbinenrad (4), das drehbar in der Kammer (2) angeordnet ist, eine Zufuhr-Leitung (6) zur Zufuhr eines Antriebsmediums in die Kammer (2) zum Antrieb des Turbinenrads (4), eine Abfuhr-Leitung (8) zur Abfuhr des Antriebsmediums aus der Kammer (2) und Mittel zum Anstellen und Abstellen einer Strömung des Antriebsmediums durch die Zufuhr-Leitung (6) zum Antrieb des Turbinenrads (4). Weiterhin weist das Turbinenhandstück Mittel zum Leiten eines gasförmigen Sperr-Mediums in die Kammer (2) auf, die dazu ausgelegt sind, einer Bildung eines Unterdrucks in der Kammer (2) bei einem Abstellen der Strömung des Antriebsmediums entgegenzuwirken. Durch das Leiten des Sperr-Mediums in die Kammer (2) lässt sich einer Entstehung eines Unterdrucks in der Kammer (2) beim Abstellen des Antriebs und somit einem unerwünschten Eintrag von Partikeln besonders effektiv entgegenwirken.

## Beschreibung

Die Erfindung betrifft ein medizinisches, insbesondere dentales Turbinenhandstück.

Bei einem dentalen Turbinenhandstück kommt es im Allgemeinen bei einem Abschalten des Turbinenantriebs dazu, dass die Turbine aufgrund ihrer Trägheit noch eine gewisse Zeit nachläuft. Hierdurch entsteht in der Kammer, in der das Turbinenrad angeordnet ist, ein Unterdruck, der dazu führen kann, dass aus einer Umgebung zusammen mit Luft Schmutzpartikel etc. in die Kammer eingesaugt werden. Dies ist natürlich unerwünscht, insbesondere weil entsprechende Partikel Krankheitserreger enthalten können, so dass die Gefahr einer Verkeimung besteht.

Aus der Schrift EP 0 758 540 A2 ist ein dentales Turbinenhandstück bekannt, bei dem der genannte Effekt dadurch entschärft ist, dass in der Abführleitung der Turbinen-Druckluft ein Ventil angeordnet ist, das beim Abschalten des Antriebs schließt. Hierdurch wird die Entstehung eines entsprechenden Unterdrucks in der Kammer vermindert. Allerdings hat die Praxis gezeigt, dass es trotz dieser Maßnahme beim Abschalten des Antriebs zu einem unerwünschten Eindringen von Partikeln kommen kann.

Der Erfindung liegt die Aufgabe zugrunde, ein medizinisches Turbinenhandstück anzugeben, bei dem der beschriebene Saugeffekt noch wirkungsvoller verringert oder verhindert werden kann.

Diese Aufgabe wird gemäß der Erfindung mit dem in dem unabhängigen Anspruch angegebenen Gegenstand gelöst. Besondere Ausführungsarten der Erfindung sind in den abhängigen Ansprüchen angegeben.

Gemäß der Erfindung ist ein medizinisches, insbesondere dentales Turbinenhandstück vorgesehen, das eine Kammer aufweist, sowie ein Turbinenrad, das drehbar in der Kammer angeordnet ist, eine Zufuhr-Leitung zur Zufuhr eines Antriebsmediums in die Kammer zum Antrieb des Turbinenrads, eine Abfuhr-Leitung zur Abfuhr des Antriebsmediums aus der Kammer und Mittel zum Anstellen und Abstellen einer Strömung des Antriebsmediums durch die Zufuhr-Leitung zum Antrieb des Turbinenrads. Weiterhin weist das Turbinenhandstück Mittel zum Leiten eines gasförmigen Sperr-Mediums in die Kammer auf, die dazu ausgelegt sind, einer Bildung eines Unterdrucks in der Kammer bei einem Abstellen der Strömung des Antriebsmediums entgegenzuwirken.

Durch das Leiten des Sperr-Mediums in die Kammer lässt sich einer Entstehung eines Unterdrucks in der Kammer beim Abstellen des Antriebs besonders effektiv entgegenwirken. Insbesondere kann eine Wirkung erzielt werden, die im Vergleich zu einem bloßen Verschließen der Abfuhr-Leitung mit einem Ventil deutlich effektiver ist.

Vorzugsweise umfassen die Mittel zum Leiten eines gasförmigen Sperr-Mediums in die Kammer eine Leitung für das Sperr-Medium, die an wenigstens einer Einleitungsmündung in die Abfuhr-Leitung und/oder in die Kammer und/oder in die Zufuhr-Leitung mündet. Besonders effektiv ist es, wenn die wenigstens eine Einleitungsmündung zumindest auch in die Abfuhr-Leitung mündet, weil auf diese Weise durch das Sperr-Medium direkt einem Luftstrom entgegengewirkt werden kann, der sich beim Abstellen der Strömung des Antriebsmediums im Bereich der Abfuhr-Leitung ausbilden könnte.

Vorteilhaft weist das Turbinenhandstück weiterhin ein in der Abfuhr-Leitung angeordnetes Ventil auf, das mit Bezug auf die Richtung der Strömung des Antriebsmediums stromabwärts der Einleitungsmündung angeordnet ist. Durch das Ventil lässt sich der Ausbildung eines Unterdrucks in der Kammer weitergehend entgegenwirken.

Vorzugsweise ist das Ventil ein Rückschlagventil, insbesondere ein Rückschlagventil, das derart gestaltet ist, dass ein Öffnungsdruck des Rückschlagventils eingestellt werden kann.

Allerdings kann es sich bei dem Ventil auch um ein aktives Ventil handeln.

Vorzugsweise ist das Ventil dazu ausgelegt, derart eingestellt zu werden, dass es die Abfuhr-Leitung geöffnet hält, wenn durch die Mittel zum Anstellen und Abstellen einer Strömung des Antriebsmediums die Strömung des Antriebsmediums zum Antrieb des Turbinenrads angestellt ist. Insbesondere ist das Ventil dementsprechend eingestellt.

Weiterhin vorzugsweise ist das Ventil dazu ausgelegt, derart eingestellt zu werden, dass es die Abfuhr-Leitung geschlossen hält, wenn durch die Mittel zum Anstellen und Abstellen einer Strömung des Antriebsmediums die Strömung des Antriebsmediums zum Antrieb des Turbinenrads abgestellt ist und durch die Mittel zum Leiten eines gasförmigen Sperr-Mediums das Sperr-Medium in die Kammer geleitet wird. Insbesondere ist das Ventil dementsprechend eingestellt. Das Sperr-Medium kann auf diese Weise nicht durch die Abfuhr-Leitung in einer Richtung weg von der Kammer entweichen, sondern wird besonders effektiv durch die Abfuhr-Leitung entgegen der vorgesehenen Richtung der Strömung des Antriebsmediums in die Kammer geleitet.

Für eine besonders komfortable Bedienung weist das Turbinenhandstück weiterhin vorzugsweise Steuermittel auf, die derart gestaltet sind, dass bei einem Abstellen der Strömung des Antriebsmediums automatisch und unmittelbar das Sperr-Medium in die Kammer geleitet wird.

Dabei sind weiterhin vorteilhaft die Steuermittel derart gestaltet, dass nach einem Abstellen der Strömung des Antriebsmediums das Sperr-Medium für eine vorab bestimmte Zeitspanne in die Kammer geleitet wird.

Das Turbinenhandstück kann auch derart gestaltet sein, dass das Sperr-Medium unabhängig davon, ob die Strömung des Antriebsmediums angestellt oder abgestellt ist, in die Kammer geleitet werden kann.

Die Erfindung wird im Folgenden anhand eines Ausführungsbeispiels und mit Bezug auf die Zeichnungen näher erläutert. Es zeigen:
- Fig. 1: eine Prinzip-Skizze zu einer Ausführungsform der Erfindung und
- Fig. 2: eine Skizze einer Schnittdarstellung zu einem Ausführungsbeispiel eines erfindungsgemäßen Turbinenhandstücks.

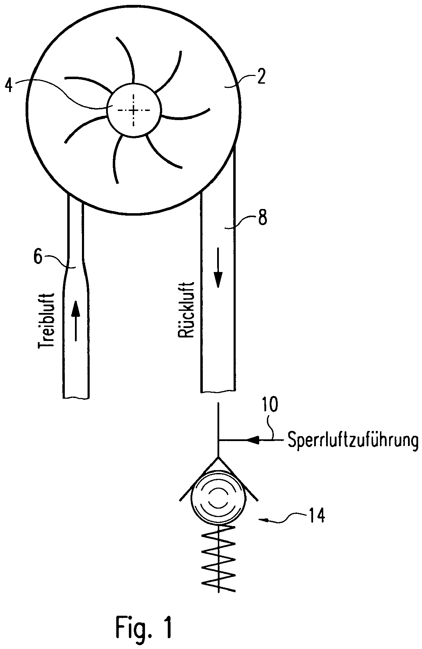

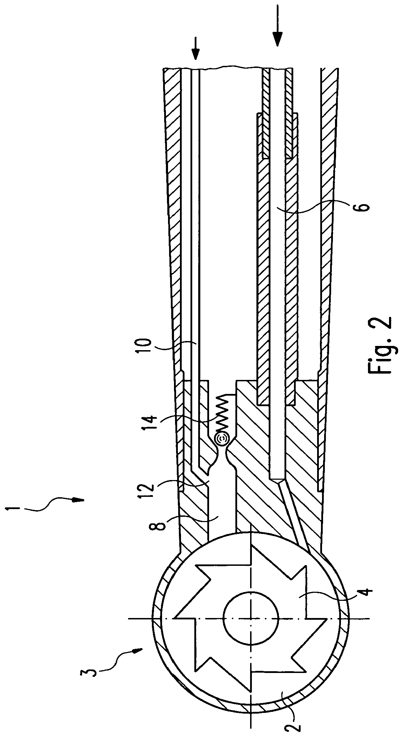

In Fig. 1 ist eine Prinzip-Skizze zu der Erfindung dargestellt. Gezeigt ist ein Turbinenrad 4 eines Turbinenhandstücks, das in einer Kammer 2, die beispielsweise in einem Kopf des Turbinenhandstücks gebildet sein kann, drehbar gelagert angeordnet ist. In Fig. 2 ist eine entsprechende Skizze gezeigt, in der in einer Schnittdarstellung ein vorderer Bereich 1 eines Turbinenhandstücks dargestellt ist, an dessen vorderem Ende ein Kopf 3 gebildet ist, in dem die Kammer 2 mit dem Turbinenrad 4 angeordnet ist.

Zum Antrieb des Turbinenrads 4 weist das Turbinenhandstück eine Zufuhr-Leitung 6 zur Zufuhr eines Antriebsmediums in die Kammer 2 auf. Bei dem Antriebsmedium kann es sich beispielsweise um Luft handeln. Weiterhin weist das Turbinenhandstück eine Abfuhr-Leitung 8 zur Abfuhr des Antriebsmediums aus der Kammer 2 auf.

Weiterhin weist das Turbinenhandstück (in den Figuren nicht gezeigte) Mittel zum Anstellen und Abstellen einer Strömung des Antriebsmediums durch die Zufuhr-Leitung 6 zum Antrieb des Turbinenrads 4 auf.

Bei einem entsprechenden bekannten Turbinenhandstück herrscht während des Betriebs der Turbine in der Kammer ein relativ hoher Überdruck, so dass keine Gefahr eines Partikel-Eintrags in die Kammer besteht. Wird die Strömung des Antriebsmediums abgestellt, so wird durch das Turbinenrad aufgrund des Nachlaufens wegen der noch vorhandenen kinetischen Energie im Bereich des Turbinengehäuses am vorderen Ende bzw. am Kopf ein Unterdruck erzeugt, so dass Schmutz und Keime aus der Umgebung angesaugt werden können.

Um dies zu verhindern weist das erfindungsgemäße Turbinenhandstück weiterhin Mittel zum Leiten eines gasförmigen Sperr-Mediums in die Kammer 2 auf, die dazu ausgelegt sind, einer Bildung eines Unterdrucks in der Kammer 2 bei einem Abstellen der Strömung des Antriebsmediums entgegenzuwirken.

Bei dem Sperr-Medium kann es sich beispielsweise um Luft handeln. Bei dem Sperr-Medium kann es sich um ein steriles und/oder antiseptisches Medium handeln.

Die Mittel zum Leiten sind vorzugsweise derart gestaltet, dass das Leiten des Sperr-Mediums in die Kammer 2 durch einen Überdruck hervorgerufen werden kann bzw. wird; der Überdruck kann beispielsweise zwischen 0,1 hPa und 10 hPa betragen.

Im gezeigten Ausführungsbeispiel umfassen die Mittel zum Leiten eine Leitung 10 für das Sperr-Medium, die an einer Einleitungsmündung 12 in die Abfuhr-Leitung 8 mündet, so dass das Sperr-Medium durch die Mittel zum Leiten durch die Leitung 10 und im weiteren Verlauf durch einen Teil der Abfuhr-Leitung 8 und schließlich in die Kammer 2 geleitet werden kann. Dabei ist die vorgesehene Strömungsrichtung für das Sperr-Medium innerhalb der Abfuhr-Leitung 8 entgegengesetzt zu der für das Antriebsmedium bei laufendem Turbinenrad 2 vorgesehene Strömungsrichtung, da das Antriebsmedium hierbei durch die Abfuhr-Leitung 8 von der Kammer 2 weg transportiert wird.

Wenn also durch die Mittel zum Leiten eines Sperr-Mediums unmittelbar nach einem Abschalten der Turbine, also nach einem Abstellen der Strömung des Antriebsmediums, das Sperr-Medium in die Kammer 2 geleitet wird, lässt sich erzielen, dass einem Aufbau eines Unterdrucks in der Kammer 2 effektiv entgegen gewirkt ist. Es hat sich gezeigt, dass auf diese Weise bewirkt werden kann, dass sich die Gefahr eines unerwünschten Eintrags von Partikeln aus dem Außenraum in die Kammer 2 bei einem Abstellen der Strömung des Antriebsmediums praktisch ausschließen lässt.

Grundsätzlich ist dementsprechend das Leiten des Sperr-Mediums zur Erzielung des genannten Effekts lediglich innerhalb einer gewissen Zeit, insbesondere der Nachlaufzeit des Turbinenrads 2 nach einem Abstellen der Strömung des Antriebsmediums erforderlich. Das Turbinenhandstück weist daher vorzugsweise Steuermittel auf, die derart gestaltet bzw. ausgebildet sind, dass bei einem Abstellen der Strömung des Antriebsmediums automatisch und unmittelbar das Sperr-Medium durch die Mittel zum Leiten in die Kammer 2 geleitet wird. Vorzugsweise ist die Gestaltung derart, dass nach einem Abstellen der Strömung des Antriebsmediums das Sperr-Medium für eine vorab bestimmte Zeitspanne in die Kammer 2 geleitet wird. Die vorab bestimmte Zeitspanne ist dabei vorzugsweise in Abhängigkeit der Nachlaufzeit des Turbinenrads 2 gewählt, also beispielsweise mindestens so groß wie die Nachlaufzeit. Alternativ kann die Zeitspanne beispielsweise zwischen 3 Sekunden und 1 Minute gewählt sein.

Das Turbinenhandstück kann aber auch so gestaltet sein, dass das Sperr-Medium durch die Mittel zum Leiten unabhängig davon in die Kammer 2 geleitet werden kann bzw. geleitet wird, ob eine Strömung des Antriebsmediums angestellt oder abgestellt ist.

Der genannte Effekt lässt sich grundsätzlich erzielen, wenn das Sperr-Medium durch die Mittel zum Leiten in die Abfuhr-Leitung 8 und/oder in die Kammer 2 und/oder in die Zufuhr-Leitung 6 eingeleitet wird. Allerdings ist es besonders effektiv, wenn die entsprechende Einleitungsmündung 12, wie oben dargestellt, in der Abfuhr-Leitung 8 angeordnet ist, also die Leitung 10 in die Abfuhr-Leitung 8 mündet. Auf diese Weise lässt sich durch die Strömung des Sperr-Mediums im Weiteren eine bremsende Wirkung auf das Turbinenrad 2 erzielen.

Eine weitergehende Effektivitätssteigerung lässt sich erzielen, wenn in der Abfuhr-Leitung 8 ein - in Fig. 2 lediglich symbolisch angedeutetes - Ventil 14 angeordnet ist, das mit Bezug auf die Richtung der Strömung des Antriebsmediums bei laufendem Turbinenrad 2 stromabwärts der Einleitungsmündung 12 angeordnet ist. Hierdurch lässt sich einer Ausbildung einer Nachlauf-bedingten Strömung des Antriebsmediums in der Abluft-Leitung 8 nach dem Abstellen der Strömung des Antriebsmediums weitergehend entgegenwirken. Bei dem Ventil 14 handelt es sich vorzugsweise um ein Rückschlagventil, insbesondere um ein passives Rückschlagventil, beispielsweise mit einer durch eine Feder erzeugten Druckschwelle. Das Ventil 14 ist vorteilhaft so gestaltet, dass die Druckschwelle bzw. ein Öffnungsdruck des Ventils 14 einstellbar ist, insbesondere so, dass es einen kleinen Überdruck in der Kammer 2 aufrecht halten kann.

Das Ventil 14 ist vorzugsweise dazu ausgelegt, so eingestellt zu werden, dass es die Abfuhr-Leitung 8 geschlossen hält, wenn durch die Mittel zum Anstellen und Abstellen die Strömung des Antriebsmediums abgestellt ist und durch die Mittel zum Leiten das Sperr-Medium in die Kammer 2 geleitet wird. Vorzugsweise ist das Ventil 14 dementsprechend eingestellt. So lässt sich das Sperr-Medium besonders gezielt in die Kammer 2 leiten. Das Ventil 14 sollte also so ausgebildet sein, dass es im geschlossenen Zustand in der Lage ist, einem - wenn auch geringen - Überdruck standzuhalten. Andererseits sollte es bei Betrieb der Turbine nur einen sehr geringen Widerstand darstellen, um die Turbinenleistung nicht übermäßig zu verringern. Das Ventil 14 ist also vorzugsweise dazu ausgelegt, derart eingestellt zu werden bzw. ist vorzugsweise derart eingestellt, dass es geöffnet ist bzw. die Abfuhr-Leitung 8 geöffnet hält, wenn durch die Mittel zum Anstellen und Abstellen die Strömung des Antriebsmediums zum Antrieb des Turbinenrads 2 angestellt ist.

Das Ventil 14 kann alternativ auch mit der beschriebenen Funktionalität durch ein aktives Ventil gebildet sein.

## Patentansprüche

1. Medizinisches, insbesondere dentales Turbinenhandstück, aufweisend
- eine Kammer (2),
- ein Turbinenrad (4), das drehbar in der Kammer (2) angeordnet ist,
- eine Zufuhr-Leitung (6) zur Zufuhr eines Antriebsmediums in die Kammer (2) zum Antrieb des Turbinenrads (4),
- eine Abfuhr-Leitung (8) zur Abfuhr des Antriebsmediums aus der Kammer (2),
- Mittel zum Anstellen und Abstellen einer Strömung des Antriebsmediums durch die Zufuhr-Leitung (6) zum Antrieb des Turbinenrads (4), **gekennzeichnet durch**
- Mittel zum Leiten eines gasförmigen Sperr-Mediums in die Kammer (2), die dazu ausgelegt sind, einer Bildung eines Unterdrucks in der Kammer (2) bei einem Abstellen der Strömung des Antriebsmediums entgegenzuwirken.

2. Turbinenhandstück nach Anspruch 1,
bei dem die Mittel zum Leiten eines gasförmigen Sperr-Mediums in die Kammer (2) eine Leitung (10) für das Sperr-Medium umfassen, die an wenigstens einer Einleitungsmündung (12) in die Abfuhr-Leitung (8) und/oder in die Kammer (2) und/oder in die Zufuhr-Leitung (6) mündet.

3. Turbinenhandstück nach Anspruch 2,
weiterhin aufweisend
- ein in der Abfuhr-Leitung (8) angeordnetes Ventil (14), das mit Bezug auf die Richtung der Strömung des Antriebsmediums stromabwärts der Einleitungsmündung (12) angeordnet ist.

4. Turbinenhandstück nach Anspruch 3,
bei dem das Ventil (14) ein Rückschlagventil ist.

5. Turbinenhandstück nach Anspruch 4,
bei dem das Rückschlagventil derart gestaltet ist, dass ein Öffnungsdruck des Rückschlagventils eingestellt werden kann.

6. Turbinenhandstück nach Anspruch 3,
bei dem das Ventil (14) ein aktives Ventil ist.

7. Turbinenhandstück nach einem Ansprüche 3 bis 6,
bei dem das Ventil (14) dazu ausgelegt ist, derart eingestellt zu werden, insbesondere derart eingestellt ist, dass es die Abfuhr-Leitung (8) geöffnet hält, wenn durch die Mittel zum Anstellen und Abstellen einer Strömung des Antriebsmediums die Strömung des Antriebsmediums zum Antrieb des Turbinenrads (4) angestellt ist.

8. Turbinenhandstück nach einem Ansprüche 3 bis 7,
bei dem das Ventil (14) dazu ausgelegt ist, derart eingestellt zu werden, insbesondere derart eingestellt ist, dass es die Abfuhr-Leitung (8) geschlossen hält, wenn durch die Mittel zum Anstellen und Abstellen einer Strömung des Antriebsmediums die Strömung des Antriebsmediums zum Antrieb des Turbinenrads (4) abgestellt ist und durch die Mittel zum Leiten eines gasförmigen Sperr-Mediums das Sperr-Medium in die Kammer (2) geleitet wird.

9. Turbinenhandstück nach einem der vorhergehenden Ansprüche, weiterhin aufweisend
- Steuermittel, die derart gestaltet sind, dass bei einem Abstellen der Strömung des Antriebsmediums automatisch und unmittelbar das Sperr-Medium in die Kammer (2) geleitet wird.

10. Turbinenhandstück nach Anspruch 9,
bei dem die Steuermittel weiterhin derart gestaltet sind, dass nach einem Abstellen der Strömung des Antriebsmediums das Sperr-Medium für eine vorab bestimmte Zeitspanne in die Kammer (2) geleitet wird.

11. Turbinenhandstück nach einem der vorhergehenden Ansprüche,
das derart gestaltet ist, dass das Sperr-Medium unabhängig davon, ob die Strömung des Antriebsmediums angestellt oder abgestellt ist, in die Kammer (2) geleitet werden kann.
